# FASCICULE DE BREVET EUROPEEN

(11) **EP 3 333 006 B1**
(45) Date de publication et mention de la délivrance du brevet: **06.05.2020**
(21) Numéro de dépôt: 17205803.4
(22) Date de dépôt: 07.12.2017
(51) Int. Cl.: B60L 3/00, B60L 7/26, B60L 15/20, B61L 3/12, B61L 27/00

(54) **PROCÉDÉ DE COMMANDE D'UN VÉHICULE FERROVIAIRE, SYSTÈME DE COMMANDE ET VÉHICULE FERROVIAIRE ASSOCIÉS**
VERFAHREN ZUR STEUERUNG EINES SCHIENENFAHRZEUGS, ENTSPRECHENDES STEUERSYSTEM UND SCHIENENFAHRZEUG
METHOD FOR CONTROLLING A RAILWAY VEHICLE, ASSOCIATED CONTROL SYSTEM AND RAILWAY VEHICLE

(30) Priorité: 08.12.2016 FR 1662154
(43) Date de publication de la demande: 13.06.2018
(73) Titulaire: ALSTOM Transport Technologies, 93400 Saint-Ouen (FR)
(72) Inventeur: BRESSON, Mathieu, 75012 PARIS (FR); BALLESTEROS, Javier, 75116 PARIS (FR)
(74) Mandataire: Lavoix

(56) Documents cités:
- EP-A1- 2 927 089
- EP-A1- 2 990 295
- FR-A1- 2 987 018
- JP-A- 2004 359 089
- JP-A- 2015 195 689
- US-B1- 9 387 866

## Description

La présente invention concerne un procédé de commande d'un véhicule ferroviaire, comportant les étapes suivantes : déplacement du véhicule ferroviaire vers l'avant, le véhicule ferroviaire étant entraîné par un système de traction, et, réception, par un système de commande du véhicule ferroviaire, d'un ordre d'arrêt définissant une position extrême d'arrêt située en avant du véhicule ferroviaire, et comprenant les étapes supplémentaires définies dans la revendication 1.

Les documents EP 2 990 295 et JP 2004/359089 décrivent des exemples de procédés de commande d'un véhicule ferroviaire.

Ce procédé est typiquement destiné à aider au garage du véhicule ferroviaire dans une piste de garage. La position extrême d'arrêt est alors la position d'une extrémité de la piste de garage du véhicule ferroviaire.

En raison de contraintes de génie civil concernant l'aménagement des voies, la taille de la piste de garage est parfois trop réduite pour permettre un garage automatique du véhicule sans devoir pour cela autoriser le véhicule ferroviaire à entrer en contact avec l'extrémité de la piste de garage avec une vitesse de collision non nulle.

Lorsque la taille de la piste de garage est trop réduite, les seuls choix existants sont alors de sacrifier le critère de sécurité d'absence de collision avec l'extrémité de la piste de garage, ou de réaliser un garage manuel du véhicule par le conducteur de celui-ci.

Le premier choix n'est pas toujours acceptable. Le deuxième choix va à l'encontre d'une démarche d'automatisation de la conduite des véhicules ferroviaires, et ne garantit pas non plus une absence de collision avec l'extrémité de la piste de garage.

L'invention a donc pour but de réduire la distance minimum d'arrêt nécessaire au véhicule ferroviaire de manière à éviter qu'il n'entre en contact avec un obstacle ou dépasse la position extrême d'arrêt.

A cet effet, l'invention concerne un procédé de commande d'un véhicule ferroviaire du type précité, comprenant aussi les étapes suivantes : détermination d'une zone d'inhibition de traction s'étendant en arrière de la position extrême d'arrêt, et, activation d'un module inhibiteur de traction interdisant le système de traction d'entraîner le véhicule ferroviaire vers l'avant lorsque le véhicule ferroviaire est dans la zone d'inhibition de traction.

Le procédé peut en outre présenter une ou plusieurs des caractéristiques ci-dessous, prise(s) seule(s) ou selon toute combinaison techniquement possible dans lequel :
- une vitesse courante du véhicule ferroviaire est mesurée et, lors de l'étape d'activation, le module inhibiteur de traction est activé lorsque le véhicule ferroviaire est dans la zone d'inhibition de traction et la vitesse courante est inférieure à une vitesse seuil ;
- une vitesse courante du véhicule ferroviaire est mesurée, et le module inhibiteur de traction est désactivé lorsque la vitesse courante est supérieure à une vitesse seuil ;
- la vitesse seuil est comprise entre 3 km/h et 6 km/h ;
- la zone d'inhibition de traction s'étend depuis la position extrême d'arrêt jusqu'à une position seuil située en arrière de la position extrême d'arrêt, à une distance seuil de ladite position extrême d'arrêt ;
- une vitesse courante du véhicule ferroviaire est mesurée, et le module inhibiteur de traction est désactivé lorsque la vitesse courante est nulle ;
- sont mesurées une vitesse courante et une distance courante du véhicule ferroviaire par rapport à la position extrême d'arrêt, et le système de commande du véhicule ferroviaire comprend un module d'enclenchement d'un système de freinage d'urgence du véhicule ferroviaire, programmé pour enclencher le freinage d'urgence lorsque la distance courante du véhicule ferroviaire devient inférieure à une distance d'alerte associée à la vitesse courante, ledit module d'enclenchement présentant un premier mode de fonctionnement lorsque le véhicule ferroviaire est hors de la zone d'inhibition de traction et/ou que le module inhibiteur de traction est désactivé, dans lequel la distance d'alerte a une première valeur, et un deuxième mode de fonctionnement lorsque le véhicule ferroviaire est dans la zone d'inhibition de traction et que le module inhibiteur de traction est activé, dans lequel la distance d'alerte a une deuxième valeur inférieure à la première valeur ;
- la position extrême d'arrêt est la position d'une extrémité d'une piste de garage du véhicule ferroviaire.

L'invention concerne aussi un système de commande d'un véhicule ferroviaire, programmé pour réceptionner un ordre d'arrêt définissant une position extrême d'arrêt située en avant du véhicule ferroviaire, le système de commande comprenant un calculateur électronique programmé pour déterminer une zone d'inhibition de traction s'étendant en arrière de la position extrême d'arrêt, et interdire un système de traction du véhicule ferroviaire d'entraîner le véhicule ferroviaire vers l'avant lorsque le véhicule ferroviaire est dans la zone d'inhibition de traction.

L'invention concerne également un véhicule ferroviaire comprenant un système de commande tel que défini ci-dessus.

L'invention sera mieux comprise à la lecture de la description qui va suivre, donnée uniquement à titre d'exemple et faites en se référant aux dessins annexés sur lesquels :
- la figure 1 est une vue schématique d'un véhicule selon l'invention ;
- la figure 2 est un graphique présentant des exemples d'évolution de la vitesse courante du véhicule ferroviaire en fonction de la position courante ; et
- la figure 3 est un organigramme d'un procédé selon l'invention.

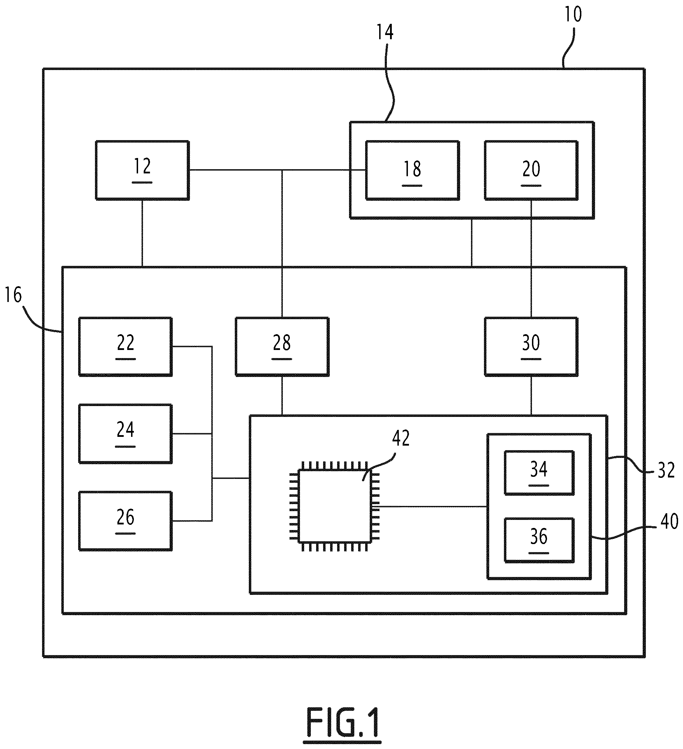

Un véhicule ferroviaire 10 selon l'invention est représenté sur la figure 1.

Le véhicule ferroviaire 10 comprend un système de traction 12 configuré pour déplacer le véhicule 10 le long d'une voie ferrée, un système de freinage 14 du véhicule 10, et un système de commande 16 supervisant le fonctionnement du véhicule ferroviaire 10. Le système de traction 12 et le système de freinage 14 sont connectés au système de commande 16.

Le véhicule 10 comporte en outre des roues (non représentées) pour circuler sur la voie ferrée. Dans la suite de la description, les termes « avant » et « arrière » sont pris par rapport au sens de circulation du véhicule 10.

Le véhicule 10 présente une extrémité avant et une extrémité arrière.

Par exemple, le véhicule 10 est un train de voyageurs ou un véhicule de transport urbain, tel qu'un métro. En variante, il peut s'agir de tout type de véhicule guidé circulant sur une infrastructure dédiée, tel qu'un monorail.

Le système de traction 12 est notamment apte à entraîner vers l'avant le véhicule 10. A cet effet, le système de traction 12 comporte typiquement un ou plusieurs moteurs pour déplacer le véhicule 10 le long de la voie ferrée et un module de puissance d'alimentation en énergie du ou de chaque moteur. Ces éléments sont bien connus et ne sont pas illustrés ni décrits plus en détail ici.

Le système de freinage 14 comporte un frein de service 18 et un frein d'urgence 20. Le frein d'urgence 20 est configuré pour garantir un freinage disponible en toutes situations, même en cas de panne du frein de service 18. A cet effet, le frein d'urgence 20 est configuré pour répondre à une certification de niveau SIL 4 selon les normes EN 50126, EN 50128, EN 50129.

Le système de commande 16 comporte un système 22 de mesure d'une vitesse courante du véhicule ferroviaire 10, un système 24 de détermination d'une position courante du véhicule 10 le long de la voie ferrée, un système de réception d'informations extérieures 26, un module de conduite automatisé 28, un module 30 d'enclenchement d'un système de freinage d'urgence du véhicule ferroviaire 10, et un calculateur électronique 32.

Les systèmes et modules du système de commande 16 sont connectés au calculateur électronique 32.

Le système de mesure 22 mesure une vitesse courante du véhicule ferroviaire 10, et est par exemple un odomètre. La vitesse courante est ici définie comme la vitesse instantanée de l'extrémité avant du véhicule 10.

Le système de détermination d'une position courante 24 est configuré pour mesurer la position courante du véhicule ferroviaire 10. La position courante du véhicule ferroviaire 10 est ici définie comme la position de l'extrémité avant du véhicule 10 le long de la voie ferrée.

A cet effet, le système de détermination 24 comprend par exemple un système odométrique capable de calculer le déplacement du train en fonction du mouvement des roues par rapport à un point de référence connu identifié grâce à la lecture d'une balise. Un tel système odométrique est connu en soit et ne sera pas décrit plus en détail ici.

Le système de réception d'informations extérieures 26 est configuré pour recevoir des informations extérieures au véhicule ferroviaire 10. Ces informations sont typiquement transmises par un système de signalisation ferroviaire extérieur au véhicule 10 au moyen d'un système de communications, comportant par exemple une liaison radio de type GSM-R ou de type WiFi ou LTE, ou comportant des transpondeurs placés fixement le long de la voie ferrée et couplés inductivement à un récepteur correspondant équipant le véhicule 10.

Ces informations comprennent de préférence un ordre d'arrêt définissant une position extrême d'arrêt Pa située en avant du véhicule ferroviaire 10.

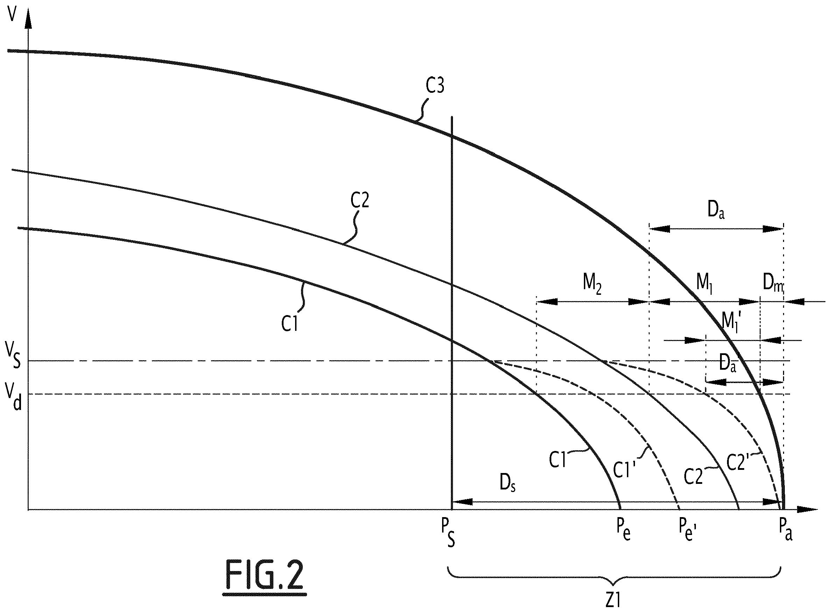

Le système de réception d'informations extérieures 26 est ainsi configuré pour réceptionner un ordre d'arrêt définissant une position extrême d'arrêt Pa (voir Figure 2) située en avant du véhicule ferroviaire. Cette position extrême d'arrêt Pa est par exemple la position d'une extrémité d'une piste de garage du véhicule ferroviaire 10. En variante, la position extrême d'arrêt Pa est une position à partir de laquelle le véhicule ferroviaire 10 doit faire marche-arrière.

Le module de conduite automatisé 28 est configuré pour réguler la vitesse courante du véhicule 10, se substituant à un conducteur.

Par exemple, le module de conduite automatisé 28 est un module de type ATO, pour « Automatic Train Opération » en langue anglaise.

Le module de conduite automatisé 28 est configuré pour commander le système de traction 12 et le système de freinage 14. Plus précisément, le module de conduite automatisé 28 est programmé pour actionner, couper et/ou contrôler le frein de service 18 et le système de traction 12.

En particulier, le module de conduite automatisé 28 est configuré pour déterminer, en fonction de la position extrême d'arrêt Pa reçue, un profil de décélération du véhicule ferroviaire 10 jusqu'à une position effective d'arrêt Pe.

Un exemple de profil de décélération est illustré sur la figure 2 par la courbe C1.

Le module d'enclenchement 30 est destiné à assurer que le véhicule ferroviaire 10 ne dépasse pas la position extrême d'arrêt Pa. A cet effet, le module d'enclenchement 30 est typiquement constitué par un module connu sous l'acronyme ATP pour « Automatic Train Protection » en langue anglaise et tel que défini par la norme IEEE 1474.

Le module d'enclenchement 30 est programmé pour enclencher le frein d'urgence 20 du système de freinage 14 lorsque, pour une vitesse courante donnée V_{d}, la distance courante du véhicule ferroviaire 10 par rapport à la position extrême d'arrêt Pa est inférieure à une distance d'alerte Dₐ par rapport à la position extrême d'arrêt Pa.

La courbe C2 de la figure 2 est un exemple de courbe relative à la distance d'alerte Dₐ régulée par le module d'enclenchement 30. Le module d'enclenchement 30 est programmé pour enclencher le frein d'urgence 20 dans le cas où la courbe C1 passe au-dessus de la courbe C2.

La distance d'alerte Dₐ dépend de la vitesse courante du véhicule 10. En particulier, pour une vitesse courante donnée V_{d}, la distance d'alerte Dₐ est calculée à partir d'une distance minimale de freinage Dₘ. Pour une vitesse courante donnée V_{d}, cette distance minimale Dₘ est la distance en dessous de laquelle le frein d'urgence 20 n'est pas apte à freiner le véhicule 10 avant la position extrême d'arrêt Pa.

La distance minimale Dₘ est définie en fonction de la configuration de la voie, telle que la présence d'une courbe ou d'une déclivité importante, et de la capacité de freinage d'urgence.

La courbe C3 de la figure 2 est un exemple de courbe relative à la distance minimale de freinage Dₘ. Dans le cas où la courbe C1 passe au-dessus de la courbe C3, le frein d'urgence 20 n'est pas apte à arrêter le véhicule 10 avant la position extrême d'arrêt Pa. Ce cas ne doit jamais arriver puisque le frein d'urgence 20 est déclenché sur la courbe C2.

Pour une vitesse courante donnée V_{d}, la distance d'alerte Dₐ est supérieure à la distance minimale Dₘ. La différence entre la distance d'alerte Dₐ et la distance minimale Dₘ constitue une première marge de sécurité M₁. Cette première marge de sécurité M₁ est définie plus en détail par la suite.

Pour une vitesse donnée V_{d}, le module de conduite automatisé 28 est avantageusement configuré pour réguler le profil de décélération afin que la position courante présente une deuxième marge de sécurité M₂ entre la position courante et une position d'alerte, la position d'alerte étant située à la distance d'alerte Dₐ de la position extrême d'arrêt Pa.

Pour une vitesse donnée, cette deuxième marge de sécurité M₂ correspond par exemple à la distance parcourue par le véhicule 10, à ladite vitesse donnée, pendant deux secondes. Cette deuxième marge de sécurité M₂ est calculée par le module de conduite automatisé 28.

Le calculateur électronique 32 comporte un module de détermination d'une zone d'inhibition de traction 34 et un module inhibiteur de traction 36.

Ces modules 34, 36 sont typiquement réalisés sous la forme de programmes enregistrés dans une mémoire 38 du calculateur 32 et exécutables par un processeur 42 du calculateur 32. En variante, ces modules 34, 36 sont réalisés au moins partiellement sous la forme de composants logiques programmables, ou encore sous la forme de composants intégrés dédiés inclus dans le calculateur électronique 32.

Le module 34 de détermination d'une zone d'inhibition de traction est configuré pour déterminer une zone d'inhibition de traction ZI, illustrée sur la figure 2, s'étendant en arrière de la position extrême d'arrêt Pa.

La zone d'inhibition de traction ZI s'étend depuis la position extrême d'arrêt Pa jusqu'à une position seuil Ps située en arrière de la position extrême d'arrêt Pa, à une distance seuil Dₛ de ladite position extrême d'arrêt Pa.

La distance seuil Dₛ est ici indépendante de la vitesse courante du véhicule 10. La distance seuil est avantageusement comprise entre 10 m et 40 m.

Le module 36 inhibiteur de traction est activable et désactivable par le calculateur 32.

Le module 36 inhibiteur de traction est configuré pour être activé au moins lorsque le véhicule ferroviaire 10 est dans la zone d'inhibition de traction ZI et que la vitesse courante n'est ni nulle, ni supérieure à une vitesse seuil Vs. Le véhicule ferroviaire 10 est considéré comme étant dans la zone d'inhibition de traction ZI lorsque la distance entre l'extrémité avant du véhicule 10 et la position extrême d'arrêt Pa est inférieure à la distance seuil Dₛ. Plus particulièrement, le véhicule ferroviaire 10 est considéré comme étant dans la zone d'inhibition de traction ZI lorsque la position courante est située entre la position seuil Ps et la position extrême d'arrêt Pa.

Lorsque le module 36 inhibiteur de traction est activé, il est configuré pour interdire au système de traction 12 d'entraîner le véhicule ferroviaire 10 vers l'avant lorsque le véhicule ferroviaire 10 est dans la zone d'inhibition de traction ZI.

Dans l'exemple de la figure 2, le module 36 inhibiteur de traction est configuré pour être désactivé lorsque la vitesse courante du véhicule ferroviaire 10 est supérieure à une vitesse seuil Vs.

La vitesse seuil Vs est ici indépendante de la position courante du véhicule 10. La vitesse seuil Vs est avantageusement comprise entre 3 km/h et 6 km/h.

Le module 36 inhibiteur de traction est également configuré pour être désactivé lorsque la vitesse courante du véhicule ferroviaire 10 s'annule alors que le véhicule ferroviaire 10 est dans la zone d'inhibition de traction ZI.

Lorsque le module 36 inhibiteur de traction est désactivé, le système de traction 12 du véhicule ferroviaire 10 est autorisé à entraîner le véhicule ferroviaire 10 vers l'avant, même lorsque le véhicule ferroviaire 10 est dans la zone d'inhibition de traction ZI.

Lorsque le véhicule ferroviaire 10 est ainsi hors de la zone d'inhibition de traction ZI et/ou lorsque le module 36 inhibiteur de traction est désactivé, le module 30 d'enclenchement du freinage d'urgence présente un premier mode de fonctionnement dans lequel, pour une vitesse courante donnée V_{d}, la distance d'alerte a une première valeur Dₐ.

Pour une vitesse courante donnée V_{d}, la première valeur de la distance d'alerte Dₐ est calculée à partir de la distance minimale Dₘ en fonction d'un retard estimé pour couper une traction vers l'avant du système de traction 12 provoquée par un ordre de traction envoyé au système de traction 12 et en fonction d'un retard estimé d'activation du frein d'urgence 20.

La marge de sécurité de la première valeur de la distance d'alerte Dₐ par rapport à la distance minimale Dₘ est ainsi calculée de façon à être supérieure à la somme des distances parcourues du fait de ces deux retards.

Ce premier mode de fonctionnement est illustré sur la figure 2, par la courbe C2.

Lorsque le véhicule ferroviaire 10 est dans la zone d'inhibition de traction ZI et que le module 36 inhibiteur de traction est activé, le module d'enclenchement 30 présente un deuxième mode de fonctionnement dans lequel, pour une vitesse courante donnée V_{d} la distance d'alerte a une deuxième valeur Dₐ'.

Pour une vitesse courante donnée V_{d}, la deuxième valeur de la distance d'alerte Dₐ' est inférieure à la première valeur de la distance d'alerte Dₐ.

En effet, pour une vitesse courante donnée V_{d}, la deuxième valeur de la distance d'alerte Dₐ' est calculée à partir de la distance minimale Dₘ en fonction du retard estimé d'activation du frein d'urgence 20 et, avantageusement, uniquement en fonction de ce retard. La traction du véhicule 10 vers l'avant par le système de traction 12 étant interdite, la deuxième valeur de la distance d'alerte Dₐ' n'est pas calculée en fonction d'un retard estimé pour couper une traction vers l'avant du système de traction 12.

La marge de sécurité M₁' de la deuxième valeur de la distance d'alerte Dₐ' par rapport à la distance minimale Dₘ ne comprend ainsi plus le retard estimé pour couper une traction vers l'avant du système de traction 12.

Ce deuxième mode de fonctionnement est illustré sur la figure 2, par la courbe C2'.

Le module de conduite automatisé 28 est configuré pour déterminer un premier profil de décélération (courbe C1) applicable lorsque le module d'inhibition de traction 36 est désactivé, et un deuxième profil de décélération (courbe C1') applicable lorsque le module d'inhibition de traction 36 est activé et que le véhicule ferroviaire 10 est dans la zone d'inhibition de traction ZI. Le deuxième profil de décélération C1' définit une position effective d'arrêt Pe' plus proche de la position extrême d'arrêt Pa que la position effective d'arrêt Pe définie par le premier profil de décélération C1. Ceci est permis par le fait que la première marge de sécurité M₁' de la distance d'alerte Da' avec la distance minimale Dm est réduite lorsque le module d'inhibition de traction 36 est activé et que le véhicule ferroviaire 10 est dans la zone d'inhibition de traction ZI.

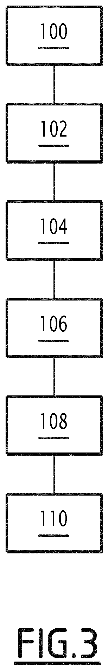

Un procédé de commande du véhicule ferroviaire 10 selon l'invention va maintenant être décrit en référence à la figure 3.

Le procédé s'applique ici au cas où le véhicule ferroviaire 10 est amené à se garer dans une piste de garage présentant une extrémité contre laquelle le véhicule 10 ne doit pas entrer en contact.

Le véhicule ferroviaire 10 se déplace ainsi vers l'avant, entraîné par le système de traction 12.

Pendant la durée du procédé, le système de mesure 22 détermine la vitesse courante du véhicule ferroviaire 10 et le système 24 détermine la position courante du véhicule ferroviaire 10.

Cette vitesse courante et cette position courante sont transmises au calculateur électronique 32.

Un système de signalisation ferroviaire extérieur au véhicule 10 envoie un ordre d'arrêt définissant la position extrême d'arrêt Pa située en avant du véhicule ferroviaire 10, cette position extrême d'arrêt Pa étant ici la position de l'extrémité de la piste de garage.

Le système de réception d'informations extérieures 26 du système de commande du véhicule ferroviaire 10 reçoit cet ordre d'arrêt et le transmet au calculateur électronique 32, au cours d'une étape de réception 100.

Cette étape 100 est suivie d'une étape 102 de détermination de la zone d'inhibition de traction au cours de laquelle le module de détermination 34 détermine une zone d'inhibition de traction ZI s'étendant en arrière de la position extrême d'arrêt Pa, jusqu'à une position seuil Ps.

Le procédé comporte ensuite une étape 104 d'activation du module inhibiteur de traction 36. Cette étape est de préférence enclenchée lorsqu'il est détecté que la position courante est en avant de la position seuil Ps, et que la vitesse courante est inférieure à une vitesse seuil Vs. Le module inhibiteur de traction 36 interdit alors le système de traction 12 d'entraîner le véhicule ferroviaire 10 vers l'avant tant que le véhicule ferroviaire 10 est dans la zone d'inhibition de traction ZI.

Une fois le module inhibiteur de traction 36 enclenché, le module de conduite automatisé 38 régule la vitesse courante du véhicule 10 suivant le deuxième profil de décélération C1' au cours d'une étape 106. Le module de conduite automatisé 38 actionne et contrôle le frein de service 18 en conséquence.

En variante, le module de conduite automatisé 38 présente le deuxième profil de décélération C1' à un conducteur du véhicule 10 qui pilote lui-même le frein de service 18 en fonction du deuxième profil de décélération C1'.

Le véhicule ferroviaire 10 s'arrête finalement à une position effective d'arrêt Pe' définie par le deuxième profil de décélération C1' au cours d'une étape d'arrêt 108.

Après l'étape d'arrêt 108, le procédé comporte une étape 110 de désactivation du module 36 inhibiteur de traction.

Grâce à l'invention, les marges de sécurité sur les distances étant réduites, le véhicule ferroviaire 10 peut être arrêté au plus près de la position extrême d'arrêt Pa, sans entrer en contact avec cette position ou la dépasser. L'arrêt peut en outre être effectué automatiquement, sans intervention d'un conducteur.

En comparaison avec un système de commande classique, le système de commande 16 selon l'invention permet ainsi une diminution comprise entre 3 m et 5 m de la distance entre la position effective d'arrêt et la position extrême d'arrêt.

## Revendications

1. Procédé de commande d'un véhicule ferroviaire (10), comportant les étapes suivantes :
- déplacement du véhicule ferroviaire (10) vers l'avant, le véhicule ferroviaire (10) étant entraîné par un système de traction (12), et
- réception (100), par un système de commande (16) du véhicule ferroviaire (10), d'un ordre d'arrêt définissant une position extrême d'arrêt (Pa) située en avant du véhicule ferroviaire (10),
**caractérisé en ce que** le procédé comprend aussi les étapes suivantes :
- détermination (102) d'une zone d'inhibition de traction s'étendant en arrière de la position extrême d'arrêt (Pa), les termes avant et arrière étant pris par rapport au sens de circulation du véhicule (10), et
- activation (104) d'un module (36) inhibiteur de traction interdisant le système de traction (12) d'entraîner le véhicule ferroviaire (10) vers l'avant lorsque le véhicule ferroviaire (10) est dans la zone d'inhibition de traction.

2. Procédé de commande selon la revendication 1, dans lequel une vitesse courante du véhicule ferroviaire (10) est mesurée, et dans lequel, lors de l'étape d'activation, le module (36) inhibiteur de traction est activé lorsque le véhicule ferroviaire (10) est dans la zone d'inhibition de traction et la vitesse courante est inférieure à une vitesse seuil.

3. Procédé de commande selon la revendication 1 ou 2, dans lequel une vitesse courante du véhicule ferroviaire (10) est mesurée, et le module (36) inhibiteur de traction est désactivé lorsque la vitesse courante est supérieure à une vitesse seuil.

4. Procédé de commande selon la revendication 2 ou 3, dans lequel la vitesse seuil est comprise entre 3 km/h et 6 km/h.

5. Procédé de commande selon l'une quelconque des revendications précédentes, dans lequel la zone d'inhibition de traction s'étend depuis la position extrême d'arrêt (Pa) jusqu'à une position seuil (Ps) située en arrière de la position extrême d'arrêt (Pa), à une distance seuil de ladite position extrême d'arrêt (Pa).

6. Procédé de commande selon une quelconque des revendications précédentes, dans lequel une vitesse courante du véhicule ferroviaire (10) est mesurée, et le module (36) inhibiteur de traction est désactivé lorsque la vitesse courante est nulle.

7. Procédé de commande selon l'une quelconque des revendications précédentes, dans lequel sont mesurées une vitesse courante et une distance courante du véhicule ferroviaire (10) par rapport à la position extrême d'arrêt (Pa),
et dans lequel le système de commande du véhicule ferroviaire comprend un module (30) d'enclenchement d'un système de freinage d'urgence du véhicule ferroviaire (10), programmé pour enclencher le freinage d'urgence lorsque la distance courante du véhicule ferroviaire (10) devient inférieure à une distance d'alerte associée à la vitesse courante, ledit module d'enclenchement (30) présentant un premier mode de fonctionnement lorsque le véhicule ferroviaire (10) est hors de la zone d'inhibition de traction et/ou que le module (36) inhibiteur de traction est désactivé, dans lequel la distance d'alerte a une première valeur, et un deuxième mode de fonctionnement lorsque le véhicule ferroviaire (10) est dans la zone d'inhibition de traction et que le module (36) inhibiteur de traction est activé, dans lequel la distance d'alerte a une deuxième valeur inférieure à la première valeur.

8. Procédé de commande selon l'une quelconque des revendications précédentes, dans lequel la position extrême d'arrêt (Pa) est la position d'une extrémité d'une piste de garage du véhicule ferroviaire (10).

9. Procédé de commande selon l'une quelconque des revendications précédentes, dans lequel le système de commande (16) comporte un module de conduite automatisé (28) configuré pour déterminer un premier profil de décélération (courbe C1) applicable lorsque le module d'inhibition de traction (36) est désactivé, et un deuxième profil de décélération (courbe C1') applicable lorsque le module d'inhibition de traction (36) est activé et que le véhicule ferroviaire (10) est dans la zone d'inhibition de traction.

10. Système de commande (16) d'un véhicule ferroviaire (10), programmé pour réceptionner un ordre d'arrêt définissant une position extrême d'arrêt (Pa) située en avant du véhicule ferroviaire (10),
**caractérisé en ce que** le système de commande (16) comprend un calculateur électronique (32) programmé pour :
- déterminer une zone d'inhibition de traction s'étendant en arrière de la position extrême d'arrêt (Pa), les termes avant et arrière étant pris par rapport au sens de circulation du véhicule (10), et
- interdire un système de traction (12) du véhicule ferroviaire (10) d'entraîner le véhicule ferroviaire (10) vers l'avant lorsque le véhicule ferroviaire (10) est dans la zone d'inhibition de traction.

11. Véhicule ferroviaire (10) comprenant un système de commande (16) selon la revendication 10.

## Patentansprüche

1. Verfahren zur Steuerung eines Schienenfahrzeugs (10), aufweisend die folgenden Schritte:
- Verlagern des Schienenfahrzeugs (10) nach vorn, wobei das Schienenfahrzeug (10) von einem Traktionssystem (12) angetrieben wird, und
- Empfangen (100), durch ein Steuersystem (16) des Schienenfahrzeugs (10), eines Anhaltebefehls, der eine Endanhalteposition (Pa) definiert, die sich vor dem Schienenfahrzeug (10) befindet,
**dadurch gekennzeichnet, dass** das Verfahren auch die folgenden Schritte umfasst:
- Bestimmen (102) einer Traktionshemmungszone, die sich hinter der Endanhalteposition (Pa) erstreckt, wobei die Begriffe vorn und hinten in Bezug auf die Fahrtrichtung des Fahrzeugs (10) herangezogen werden, und
- Aktivieren (104) eines Traktionshemmungsmoduls (36), das dem Traktionssystem (12) untersagt, das Schienenfahrzeug (10) nach vorn anzutreiben, wenn das Schienenfahrzeug (10) in der Traktionshemmungszone ist.

2. Steuerungsverfahren nach Anspruch 1, wobei eine laufende Geschwindigkeit des Schienenfahrzeugs (10) gemessen wird und wobei beim Aktivierungsschritt das Traktionshemmungsmodul (36) aktiviert wird, wenn das Schienenfahrzeug (10) in der Traktionshemmungszone ist und die laufende Geschwindigkeit unter einer Grenzgeschwindigkeit ist.

3. Steuerungsverfahren nach Anspruch 1 oder 2, wobei eine laufende Geschwindigkeit des Schienenfahrzeugs (10) gemessen wird und das Traktionshemmungsmoduls (36) deaktiviert wird, wenn die laufende Geschwindigkeit über einer Grenzgeschwindigkeit ist.

4. Steuerungsverfahren nach Anspruch 2 oder 3, wobei die Grenzgeschwindigkeit zwischen 3 km/h und 6 km/h liegt.

5. Steuerungsverfahren nach einem der vorangehenden Ansprüche, wobei sich die Traktionshemmungszone ab der Endanhalteposition (Pa) bis zu einer Grenzposition (Ps), die sich hinter der Endanhalteposition (Pa) befindet, in einem Grenzabstand von der Endanhalteposition (Pa) erstreckt.

6. Steuerungsverfahren nach einem der vorangehenden Ansprüche, wobei eine laufende Geschwindigkeit des Schienenfahrzeugs (10) gemessen wird und das Traktionshemmungsmodul (36) deaktiviert wird, wenn die laufende Geschwindigkeit Null ist.

7. Steuerungsverfahren nach einem der vorangehenden Ansprüche, wobei eine laufende Geschwindigkeit und ein laufender Abstand des Schienenfahrzeugs (10) in Bezug auf die Endanhalteposition (Pa) gemessen werden,
und wobei das Steuersystem des Schienenfahrzeugs ein Auslösemodul (30) eines Notbremssystems des Schienenfahrzeugs (10) umfasst, das programmiert ist, um die Notbremsung auszulösen, wenn der laufende Abstand des Schienenfahrzeugs (10) kleiner als ein Warnabstand wird, der der laufenden Geschwindigkeit zugeordnet ist, wobei das Auslösemodul (30) einen ersten Betriebsmodus aufweist, wenn das Schienenfahrzeug (10) außerhalb der Traktionshemmungszone ist und/oder das Traktionshemmungsmodul (36) deaktiviert ist, in welchem der Warnabstand einen ersten Wert hat, und einen zweiten Betriebsmodus, wenn das Schienenfahrzeug (10) in der Traktionshemmungszone ist und das Traktionshemmungsmodul (36) aktiviert ist, in welchem der Warnabstand einen zweiten Wert unter dem ersten Wert hat.

8. Steuerungsverfahren nach einem der vorangehenden Ansprüche, wobei die Endanhalteposition (Pa) die Position eines Endes eines Werkstattwegs des Schienenfahrzeugs (10) ist.

9. Steuerungsverfahren nach einem der vorangehenden Ansprüche, wobei das Steuersystem (16) ein Modul zum automatisierten Fahren (28) aufweist, das konfiguriert ist, um ein ersten Entschleunigungsprofil (Kurve C1) zu bestimmen, das anwendbar ist, wenn das Traktionshemmungsmodul (36) deaktiviert ist, und ein zweites Entschleunigungsprofil (Kurve C1'), das anwendbar ist, wenn das Traktionshemmungsmodul (36) aktiviert ist und das Schienenfahrzeug (10) in der Traktionshemmungszone ist.

10. Steuersystem (16) eines Schienenfahrzeugs (10), das programmiert ist, um einen Anhaltebefehl zu empfangen, der eine Endanhalteposition (Pa) definiert, die sich vor dem Schienenfahrzeug (10) befindet,
**dadurch gekennzeichnet, dass** das Steuersystem (16) einen elektronischen Rechner (32) umfasst, der programmiert ist, um:
- eine Traktionshemmungszone zu bestimmen, die sich hinter der Endanhalteposition (Pa) erstreckt, wobei die Begriffe vorn und hinten in Bezug auf die Fahrtrichtung des Fahrzeugs (10) herangezogen werden, und
- einem Traktionssystem (12) des Schienenfahrzeugs (10) zu untersagen, das Schienenfahrzeug (10) nach vorn anzutreiben, wenn das Schienenfahrzeug (10) in der Traktionshemmungszone ist.

11. Schienenfahrzeug (10), umfassend ein Steuersystem (16) nach Anspruch 10.

## Claims

1. Method for controlling a railway vehicle (10), comprising the following steps:
- moving the railway vehicle (10) forward, wherein the railway vehicle (10) is driven by a traction system (12), and
- reception (100), by a control system (16) of the railway vehicle (10), of a stop command defining an extreme stop position (Pa) located in front of the railway vehicle (10),
**characterized in that** the method also comprises the following steps:
- determination (102) of a traction inhibition zone extending behind the extreme stop position (Pa), the terms in front of and behind being understood with respect to the direction of circulation of the vehicle (10), and
- activation (104) of a traction inhibition module (36) preventing the traction system (12) from driving the railway vehicle (10) forward when the railway vehicle (10) is in the traction inhibition zone.

2. Control method according to claim 1, wherein a current speed of the railway vehicle (10) is measured, and wherein, during the activation step, the traction inhibition module (36) is activated when the railway vehicle (10) is in the traction inhibition zone and the current speed is less than a threshold speed.

3. Control method according to claim 1 or 2, wherein a current speed of the railway vehicle (10) is measured, and the traction inhibition module (36) is deactivated when the current speed is greater than a threshold speed.

4. Control method according to claim 2 or 3, wherein the threshold speed is comprised between 3 km/h and 6 km/h.

5. Control method according to any one of the preceding claims, wherein the traction inhibition zone extends from the extreme stop position (Pa) to a threshold position (Ps) located behind the extreme stop position (Pa) at a threshold distance from the extreme stop position (Pa).

6. Control method according to any one of the preceding claims, wherein a current speed of the railway vehicle (10) is measured, and the traction inhibition module (36) is deactivated when the current speed is zero.

7. Control method according to any one of the preceding claims, wherein a current speed and a current distance of the railway vehicle (10) relative to the extreme stop position (Pa) are measured,
and wherein the railway vehicle control system comprises a module (30) for engaging an emergency braking system of the railway vehicle (10) that is programmed to engage emergency braking when the current distance of the railway vehicle (10) becomes less than a warning distance associated with the current speed, wherein the engagement module (30) has a first mode of operation when the railway vehicle (10) is outside the traction inhibition zone and/or the traction inhibition module (36) is deactivated wherein the warning distance has a first value, and a second operating mode when the railway vehicle (10) is in the traction inhibition zone and the traction inhibit module (36) is activated wherein the warning distance has a second value less than the first value.

8. Control method according to any one of the preceding claims, wherein the extreme stop position (Pa) is the position of an end of a railway siding of the railway vehicle (10).

9. Control method according to any one of the preceding claims, wherein the control system (16) comprises an automated driving module (28) configured to determine a first deceleration profile (curve C1) that is applicable when the traction inhibition module (36) is deactivated, and a second deceleration profile (curve C1') that is applicable when the inhibition module traction (36) is activated and the railway vehicle (10) is in the traction inhibition zone (ZI).

10. Control system (16) of a railway vehicle (10), programmed to receive a stop command defining an extreme stop position (Pa) located in front of the railway vehicle (10),
**characterized in that** the control system (16) comprises an electronic computer (32) programmed for:
- determining a traction inhibition zone extending behind the extreme stop position (Pa), the terms in front of and behind being understood with respect to the direction of circulation of the vehicle (10), and
- preventing a traction system (12) of the railway vehicle (10) from driving the railway vehicle (10) forward when the railway vehicle (10) is in the traction inhibition zone.

11. Railway vehicle (10) comprising a control system (16) according to claim 10.
